# FASCICULE DE BREVET EUROPEEN

(11) **EP 2 080 244 B1**
(45) Date de publication et mention de la délivrance du brevet: **04.05.2011**
(21) Numéro de dépôt: 07823737.7
(22) Date de dépôt: 24.08.2007
(51) Int. Cl.: H01M 8/02, H01M 8/04

(54) **PILE À COMBUSTIBLE À OXYDE SOLIDE, INCORPORANT UN ÉCHANGEUR THERMIQUE**
FESTOXIDBRENNSTOFFZELLE MIT EINEM THERMISCHEN AUSTAUSCHGLIED
SOLID OXIDE FUEL CELL COMPRISING A THERMAL EXCHANGER

(30) Priorité: 21.09.2006 FR 0653886
(43) Date de publication de la demande: 22.07.2009
(73) Titulaire: Commissariat à l'Énergie Atomique et aux Énergies Alternatives, 75015 Paris (FR); SNECMA Services, 75015 Paris (FR)
(72) Inventeur: FOURMIGUE, Jean-François, F-38600 Fontaine (FR)
(74) Mandataire: Vuillermoz, Bruno
(86) Numéro de dépôt international: PCT/FR2007/051837
(87) Numéro de publication internationale: WO 2008/034987

(56) Documents cités:
- WO-A-2004/001873
- WO-A1-2005/057701
- US-A- 5 366 819
- US-A- 5 573 867
- US-A- 6 024 859

## Description

### Domaine technique

L'invention se rattache au domaine des piles à combustibles, et plus spécifiquement des piles à combustibles du type à oxyde solide, couramment appelées SOFC pour "Solid Oxid Fuel Cell". L'invention concerne plus spécifiquement une conception intégrée de piles, optimisée en terme des échanges thermiques relatifs au fluide gazeux nécessaire pour entretenir la réaction chimique se déroulant au coeur de la pile.

### Techniques antérieures

Les piles à combustibles du type SOFC mettent en oeuvre une réaction chimique qui transforme de l'oxygène en ions O²⁻. En pratique, cet oxygène est apporté par la circulation d'un flux d'air à l'intérieur d'un coeur de pile qui comporte une pluralité de galettes formant des électrodes céramiques séparées par un électrolyte.

Pour fonctionner correctement, les électrodes et l'ensemble du coeur de pile doivent être portés à une température élevée, de l'ordre de 900 à 1000°C. Des dispositifs appropriés, typiquement électriques, permettent d'entretenir la température au sein du coeur de pile. Dans le même but, l'air contenant l'oxygène qui alimente le coeur de pile doit également être acheminé à une température élevée, proche de la température de fonctionnement évoquée.

Ainsi, de façon classique, pour maintenir la température élevée à l'intérieur du coeur de pile, ce dernier est installé dans une enceinte thermique comportant une paroi fortement isolante. De plus, l'air alimentant le coeur de pile est préchauffé par un dispositif approprié, lui permettant d'atteindre la température voulue pour un fonctionnement adéquat du coeur de pile.

En pratique, pour des raisons de sécurité la température à l'extérieur de l'enceinte isolant et renfermant le coeur de pile ne doit pas être supérieure à 60°C. On conçoit que de telles contraintes imposent l'emploi de couches isolantes très épaisses pour réaliser l'enceinte thermique du coeur de pile. Une telle conception se traduit donc par un encombrement et une complexité très élevée.

Des solutions ont déjà été proposées dans le but d'améliorer la construction de ce type de pile. Ainsi, dans le document US 2004/224196. On décrit une pile qui comporte un échangeur et un réformeur agencés en combinaison avec le coeur de pile, l'ensemble étant enfermé dans une enceinte thermique. La nécessité d'une épaisseur importante de la paroi de cette enceinte demeure, avec des conséquences en termes d'encombrement global et de coût.

Par ailleurs, dans le document US 2005/0089731, on a décrit une pile qui inclut à l'intérieur d'une même enceinte le coeur de pile et l'échangeur permettant d'amener l'air à température satisfaisante pour le fonctionnement du coeur de pile. Plus précisément, cet échauffement a lieu à l'intérieur d'un échangeur dans lequel l'air froid alimentant dans le coeur de pile est réchauffé par l'air chaud qui en ressort.

L'ensemble du coeur de pile et de l'échangeur sont disposés à l'intérieur d'une enceinte qui doit être thermiquement très isolante, et qui présente donc les inconvénients précités.

Les documents WO 2005/057701 et WO 2004/001873 présentent des échangeurs thermiques cylindriques associes à des piles à combustible.

L'objectif de l'invention est de limiter l'encombrement de l'enceinte de la pile, incluant donc le coeur de pile, et également des dispositifs nécessaires à la montée en température de l'air qui alimente le coeur de pile.

### Exposé de l'invention

L'invention concerne donc une pile à combustible à oxyde solide, qui comporte de manière classique un coeur de pile à l'intérieur duquel a lieu la réaction électrochimique ainsi qu'un échangeur thermique qui alimente ce coeur de pile en un fluide comportant de l'oxygène à une température nécessaire au fonctionnement du coeur de pile.

Cet échangeur comporte un circuit de fluide froid interfacé thermiquement avec un circuit de fluide chaud. Le circuit de fluide froid alimente l'entrée en fluide du coeur de pile et le circuit de fluide chaud est alimenté par la sortie en fluide du coeur de pile. Conformément à l'invention, cette pile se caractérise en ce que l'échangeur thermique est disposé concentriquement avec le coeur de pile. Autrement dit, le coeur de pile est recouvert de l'échangeur de préchauffage de l'air qui alimente le coeur de pile.

Autrement dit, l'invention consiste à combiner le coeur de pile avec l'échangeur assurant le préchauffage de l'air qui l'alimente. Ainsi, une partie de l'énergie dissipée lors du refroidissement de l'air de sortie du coeur de pile sert à réchauffer l'air froid qui doit y rentrer, ce qui améliore le rendement thermique de l'installation globale.

De plus, l'échangeur thermique, disposé concentriquement autour du coeur de pile assure une fonction d'enceinte thermique, en agissant sensiblement à la manière d'une cloche qui recouvre le coeur de pile.

Selon une caractéristique de l'invention, tout ou partie de la périphérie de l'échangeur peut être formée par une portion initiale du circuit de fluide froid. Autrement dit, l'air froid qui entre dans l'échangeur chemine juste après son entrée en périphérie de l'échangeur, de sorte que la température périphérique de l'échangeur est sensiblement voisine de la température ambiante.

En d'autres termes, la présence de l'air froid sur la périphérie de l'échangeur, permet d'avoir une température de paroi extérieure de l'échangeur aussi proche que possible de la température d'entrée de l'air. De la sorte, la partie externe de l'échangeur contribue à l'isolation thermique, vis-à-vis de l'extérieur. Il n'est donc plus nécessaire d'employer une enceinte thermique spécifique, qui est généralement volumineuse et coûteuse.

Avantageusement en pratique, l'échangeur peut-être de forme générale cylindrique, correspondant ainsi à la forme du coeur de pile, notamment lorsque les cellules élémentaires et les électrodes épousent une forme de disque. Dans cette configuration, l'échangeur peut ainsi comporter une pluralité de plaques sensiblement cylindriques et coaxiales, qui définissent entre elles des circuits de fluide chaud et froid reliés alternativement en série.

Autrement dit, ces plaques élémentaires définissent des portions des circuits de fluide qui sont alternés, de manière à assurer correctement l'échange de chaleur entre les deux circuits de fluide.

Pour assurer également une bonne isolation de l'ensemble de l'échangeur vis-à-vis de l'extérieur, il peut être prévu qu'au moins les deux premières portions du circuit de fluide froid qui sont reliées en série, soient juxtaposées en périphérie de l'échangeur. Autrement dit, contrairement à la partie centrale de l'échangeur dans lequel les portions de circuit de fluide froid sont alternées, la partie extérieure de l'échangeur peut comporter deux ou trois portions de circuit de fluide froid successives, au sein duquel aucun échange thermique n'a donc lieu, mais qui assure une fonction d'isolation vis-à-vis de l'extérieur.

### Description sommaire des figures

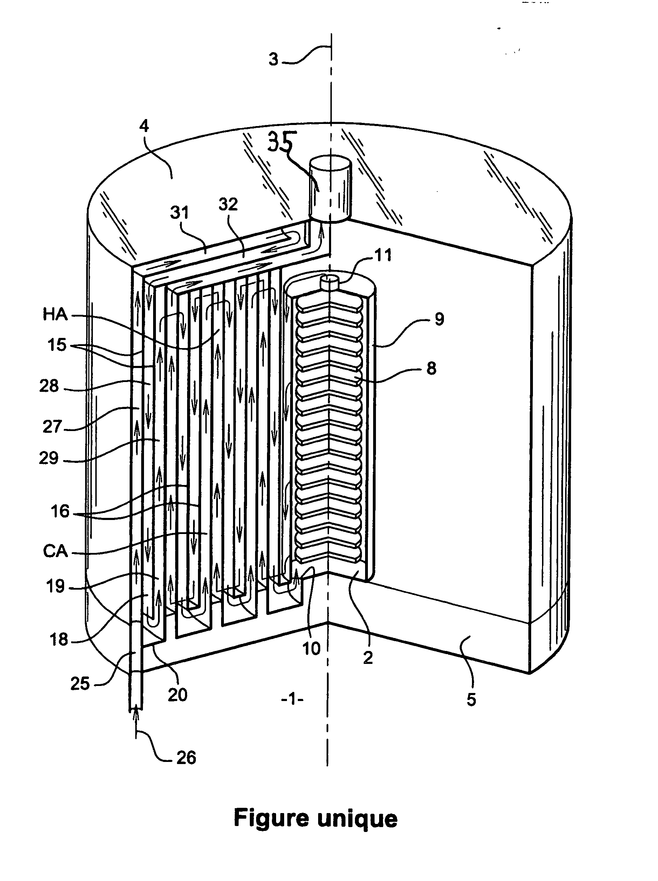

La manière de réaliser l'invention, ainsi que les avantages qui en découlent ressortiront bien de la description du mode de réalisation qui suit, à l'appui de l'unique figure annexée, qui représente une vue en perspective sommaire, d'une pile conforme à l'invention dans lequel une portion a été extraite, pour laisser apparaître la constitution interne de l'ensemble. L'ensemble des éléments nécessaires pour le fonctionnement d'une pile à combustible n est pas représenté, mais y figurent uniquement des aspects importants pour la compréhension de l'invention.

### Manière de réaliser l'invention

La pile à combustible (1) illustrée à la figure unique est représentée schématiquement, et comporte principalement un coeur de pile (2) situé au niveau de l'axe de révolution de l'ensemble, sur lequel est disposé l'échangeur caractéristique (4), qui recouvre le coeur de pile (2) à la manière d'une cloche, l'ensemble reposant sur un support (5) fermant l'enceinte ainsi définie autour du coeur de pile (2).

De manière simplifiée, le coeur de pile (2) comporte un ensemble de cellules (8) superposées, enfermées à l'intérieur d'une paroi rigide cylindrique (9). Cette paroi (9) présente à son niveau inférieur une ouverture (10) permettant l'entrée d'une circulation d'air. Des agencements peuvent être prévus notamment dans la partie haute de cette enceinte (9) pour permettre la sortie de ce fluide dont une partie de l'oxygène qu'il contient aura été consommé par les cellules (8).

Conformément à l'invention, l'échangeur (4) qui permet de délivrer le flux d'air au coeur de pile (2) comporte deux circuits de fluide distincts. Ces deux circuits (CA, HA) sont définis entre des plaques (15, 16) de forme générale cylindrique, et coaxiales. Entre ces différentes plaques (15, 16), sont ainsi définies des portions des deux circuits de fluide (CA, HA) qui sont disposées de manière alternées, de façon classique dans un échangeur à plaques.

La géométrie, les matériaux et autres agencements spécifiques peuvent être prévus, en fonction des performances souhaitées.

La liaison entre les différentes portions verticales des deux circuits de fluide (HA, CA) bien que non représentées, est réalisée de façon appropriée pour limiter les pertes de charge.

Dans leur partie basse, chacun des canaux (18, 19), par exemple du circuit de fluide froid (CA) sont reliés en série par des portions (20) réalisées dans la plaque (5) formant le socle isolant et le fond de l'ensemble (1). Ce socle (5) est percé d'une ouverture (25) permettant l'entrée du fluide de gaz frais (26). Conformément à une caractéristique de l'invention, les portions (27, 28, 29) du circuit de fluide froid directement reliées à l'entrée du fluide froid (26) sont reliées en série, et juxtaposées, sans prendre en sandwich de portions du circuit de fluide chaud. Les portions (27, 28) sont reliées en série par l'intermédiaire de deux portions (31, 32) se trouvant dans la partie haute de l'échangeur. De la sorte, la fraction du circuit de fluide froid (CA) constitué des différentes portions (27, 28, 29, 31, 32) présentent une longueur relativement importante, et forme une zone qui se trouve sensiblement à la température du fluide froid (26). Une isolation thermique de l'intérieur de l'échangeur est donc ainsi réalisée.

Bien entendu, de multiples géométries en ce qui concerne les zones de connexion entre les différents canaux délimités entré les plaques (15, 16) peuvent être réalisées, sans sortir du cadre de l'invention.

A titre d'exemple, le circuit de fluide froid peut accueillir un fluide (26) à une température ambiante, pouvant aller jusqu'à 60°C. Ce fluide (26) parcourt l'échangeur pour atteindre une température de l'ordre de 650°C en entrée du coeur de pile (2). L'air chaud qui sort du coeur de pile (2) se trouve à une température de l'ordre de 900°C, et sa température s'abaisse au fur et à mesure qu'il chemine dans le circuit de fluide chaud, pour aboutir, au niveau de la tubulure de sortie (35) aux alentours de 500°C.

Il ressort de ce qui précède que la pile à combustible conforme à l'invention présente l'avantage majeur de combiner dans un même élément structurel le coeur de pile avec l'échangeur thermique assurant le préchauffage de l'air fournissant l'oxygène au coeur de pile.

Cet air est réchauffé par l'air issu du coeur de pile, de sorte que le bilan thermique de l'installation globale est amélioré.

En outre, l'échangeur, de part sa localisation et sa constitution joue le rôle d'enceinte thermique autour du coeur de pile, ce qui réduit donc la complexité et l'encombrement global de l'installation.

## Revendications

1. Pile à combustible (1) à oxyde solide, comprenant un coeur de pile (2) et un échangeur thermique (4) apte à alimenter ledit coeur de pile (1) en un fluide à une température nécessaire à son fonctionnement, l'échangeur comportant un circuit de fluide froid (CA) interfacé thermiquement avec un circuit de fluide chaud (HA), le circuit de fluide froid (CA) alimentant l'entrée (10) en fluide du coeur de pile et le circuit de fluide chaud étant alimenté par la sortie (11) en fluide du coeur de pile, **caractérisée ce que** l'échangeur thermique (4) est disposé concentriquement avec le coeur de pile (2).

2. Pile à combustible selon la revendication 1, **caractérisée en ce que** l'échangeur présente tout ou partie de sa périphérie qui est formée par une portion initiale (27-29) du circuit de fluide froid (CA).

3. Pile à combustible selon la revendication 1, **caractérisée en ce qu'**au moins les deux portions du circuit de fluide froid reliées en série sont juxtaposées en périphérie de l'échangeur.

4. Pile à combustible selon la revendication 1, **caractérisée en ce que** l'échangeur (4) est de forme cylindrique.

5. Pile à combustible selon la revendication 1, **caractérisée en ce que** l'échangeur (4) comporte une pluralité de plaques (15-16) cylindriques et coaxiales, définissant entre elles des portions de circuit de fluide chaud et froid, les portions des deux circuits étant reliées alternativement en série.

## Claims

1. Solid oxide fuel cell (1), comprising a cell core (2) and a thermal exchanger (4) suitable for supplying said cell core (1) with a fluid at a given temperature required for its operation, the exchanger comprising a cold fluid circuit (CA) provided with a thermal interface with a hot fluid circuit (HA), the cold fluid circuit (CA) supplying the fluid inlet (10) of the cell core and the hot fluid circuit being supplied by the fluid outlet (11) of the cell core, **characterized in that** the thermal exchanger (4) is placed concentrically relative to the cell core (2).

2. Fuel cell as claimed in claim 1, **characterized in that** the exchanger has all or part of its periphery formed by an initial portion (27-29) of the cold fluid circuit (CA).

3. Fuel cell as claimed in claim 1, **characterized in that** at least the two portions of the cold fluid circuit connected in series are juxtaposed on the periphery of the exchanger.

4. Fuel cell as claimed in claim 1, **characterized in that** the exchanger (4) is generally cylindrical in shape.

5. Fuel cell as claimed in claim 1, **characterized in that** the exchanger (4) comprises a plurality of substantially cylindrical and coaxial plates (15-16), defining between them hot and cold fluid circuit portions, the portions of the two circuits being connected alternately in series.

## Patentansprüche

1. Festoxid-Brennstoffzelle (1), einen Zellenkern (2) und einen Wärmeaustauscher (4) umfassend, der in der Lage ist, den Zellenkern (1) mit einem Fluid in einer zu dessen Funktionsablauf notwendigen Temperatur zu versorgen, wobei der Austauscher einen Kaltfluidkreislauf (CA) umfasst, der thermisch mit einem Warmfluidkreislauf (HA) verbunden ist, wobei der Kaltfluidkreislauf (CA) den Eingang (10) des Zellenkerns mit Fluid versorgt und der Warmfluidkreislauf den Ausgang (11) des Zellenkerns mit Fluid versorgt, **dadurch gekennzeichnet, dass** der Wärmeaustauscher (4) konzentrisch mit dem Zellenkern (2) angeordnet ist.

2. Brennstoffzelle nach Anspruch 1, **dadurch gekennzeichnet, dass** der Austauscher seinen gesamten Umfang oder einen Teil seines Umfangs darbietet, der durch einen Anfangsabschnitt (27 - 29) des Kaltfluidkreislaufs (CA) gebildet ist.

3. Brennstoffzelle nach Anspruch 1, **dadurch gekennzeichnet, dass** zumindest die beiden Abschnitte des Kaltfluidkreislaufs, die in Reihe verbunden sind, am Umfang des Austauschers nebeneinander liegen.

4. Brennstoffzelle nach Anspruch 1, **dadurch gekennzeichnet, dass** der Austauscher (4) von zylindrischer Form ist.

5. Brennstoffzelle nach Anspruch 1, **dadurch gekennzeichnet, dass** der Austauscher (4) mehrere zylindrische und koaxiale Platten (15 - 16) umfasst, die zwischen sich Kalt- und Warmfluidkreislaufabschnitte definieren, wobei die Abschnitte der beiden Kreisläufe abwechselnd in Reihe verbunden sind.
